# EUROPEAN PATENT APPLICATION

(11) **EP 4 847 220 A1**
(43) Date of publication of application: **02.12.2026**
(21) Application number: 26181436.2
(22) Date of filing: 27.05.2026
(51) Int. Cl.: B27M 1/00, B23Q 3/00, B27M 1/08

(54) **MACHINE FOR MACHINING A WORKPIECE AND METHOD FOR CHECKING A POSITION OF AN ACCESSORY ON A WORK TABLE OF A MACHINE FOR MACHINING A WORKPIECE**

(30) Priority: 28.05.2025 IT 202500012364
(71) Applicant: SCM Group S.p.A., 47921 Rimini (RN) (IT)
(72) Inventor: VANNUCCI, Carlo, 47921 Rimini (RN) (IT); BALDUCCI, Andrea, 47921 Rimini (RN) (IT); MARINI, Christian, 47921 Rimini (RN) (IT)
(74) Representative: Gallo, Gianluca

(57) **Abstract**

Described is a machine (M) for machining a workpiece, in particular a workpiece made of wood or similar material, comprising a work table (100) and a machining unit (200) to perform at least one machining operation on said workpiece. The machine (M) also comprises at least one accessory (300) configured to be coupled to, and uncoupled from, said work table (100) and to support and hold in place the workpiece. The machine (M) comprises at least one emitting element (400), configured to project, in a predetermined position on the work table (100), a light beam (R) defining a positioning point (P) for the at least one accessory (300). The machine (M) comprises at least one indicating device (500) coupled to the accessory (300) and which can be activated to provide an operator with a positioning signal representing the fact that the accessory (300) has been positioned in the predetermined position. The machine (M) comprises at least one receiving element (600) coupled to the accessory (300) and configured to send an activation signal to the indicating device (500) when the light beam (R) hits the receiving element (600).

## Description

The present invention relates to a machine for machining a workpiece, in particular a workpiece made of wood or similar materials such as, for example, plastic, metal, composite materials and a method for configuring a machine, in particular, a machine for machining a workpiece, more specifically, a workpiece made of wood or similar materials.

The present invention also relates to a method for checking a position of an accessory on a work table of a machine for machining a workpiece.

In the sector of machines for machining a wooden workpiece, computer numerical control (CNC) machines, typically called machining centres (MC), are known for the machining of wooden panels and/or workpieces made of solid wood, or the like. Reference will be made below generically to workpieces to be machined, or workpieces, meaning both panels and solid workpieces.

As is well known, an MC for machining a workpiece may comprise one or more hold-down devices such as, for example, suction cups or clamps, which have the aim of supporting and holding in place respectively a panel or a solid workpiece to be machined.

The suction cups are typically used in the machining of panels, that is, of elements having two dimensions (length and width) which are predominant relative to a third dimension (thickness). The holding in place of the panel on one or more suction cups is achieved by generating a negative pressure between the suction cups and the panel to be held in place. This negative pressure creates a holding force.

In the operations for machining solid wood, for example wooden blocks, that is, oblong elements with a rectangular section, one or more grippers, or clamps, are typically used to support and hold in place the workpiece to be machined. The solid workpiece is held in place by means of two jaws that tighten around the workpiece.

Usually, the hold-down devices are coupled, in a fixed or removable manner, to a work table that defines a work area oriented according to a work surface. The work surface is typically parallel to the supporting surface of the MC and may extend, for example, along a longitudinal axis and a transversal axis perpendicular to the longitudinal axis.

The work table of the MC may comprise a plurality of bars (the so-called bar work surface, or simply "bar surface"), which may extend, for example, along the transversal axis, or a platform on which the workpiece is placed. The hold-down devices may be coupled to each bar or to the platform in a removable manner. In this situation, it is possible to position the hold-down devices themselves in the work area so as to adapt to the size of one or more panels to be machined.

Typically, the MCs also comprise a machining unit configured to support and move a machine tool on the work area. In particular, the machining unit may comprise a spindle to which the machining tool may be coupled, for example, in a removable manner.

The work surface may be set up by an operator with different hold-down devices, in particular when the hold-down devices may be coupled to the work surface in a removable manner. This set-up must take into account both the correct support and holding in place of the workpiece to be machined, and the fact that, during the machining of the workpiece, care should be taken to prevent that the machining unit impacts on, or is prevented from moving by, one or more hold-down devices that support and hold in place the workpiece. The hold-down devices may also be positioned on the work surface in different positions.

In order to correctly set up a work surface for a predetermined machining of a workpiece, the MC may, for example, display on a screen a set-up configuration of the work surface, indicating the position of each hold-down device to be positioned on the work surface.

Alternatively, some MCs comprise a laser projector configured to project onto the work surface the outline of the hold-down device to be positioned, so that the operator can place the hold-down device so that it matches the projected outline.

However, by means of the above-mentioned procedures, it is not possible to know whether the positioning of the hold-down devices is actually correctly carried out or not. In fact, by means of the above-mentioned procedures, the operator does not have any feedback regarding whether or not the work surface has been set up correctly.

The technical purpose of the present invention is thus to provide a machine for machining a workpiece and a method for checking a position of an accessory on a work table of a machine for machining a workpiece which are able to overcome the drawbacks arising from the prior art.

The aim of the present invention is thus to provide a machine for machining a workpiece that enables the correct set-up of the work surface to be checked in a reliable manner.

A further aim of the present invention is to provide a method for checking a position of an accessory on a work table of a machine for machining a workpiece that is efficient and effective in determining the correct set-up of the work surface.

The technical purpose and the aims specified are substantially achieved by a machine for machining a workpiece and by a method for checking a position of an accessory on a work table of a machine for machining a workpiece comprising the technical features set out in one or more of the accompanying claims. The dependent claims correspond to possible embodiments of the invention.

In particular, the technical purpose indicated and the aims specified are achieved by a machine for machining a workpiece, in particular a wooden workpiece or the like, according to the present invention.

The machine comprises a work table.

The work table may comprise a continuous platform or a plurality of bars juxtaposed to each other.

The machine also comprises a machining unit movable relative to the work table and configured to perform at least one machining process on the workpiece.

The machine also comprises at least one accessory configured to be coupled to, and uncoupled from, the work table and to support and hold in place the workpiece.

Preferably, the machine comprises a plurality of accessories.

Preferably, the accessory is selectable, by way of a non-limiting example, from a suction cup, a mechanical stop, a clamp, a gripper, and the like.

The machine further comprises at least one emitting element configured to project, in a predetermined position of the work table, a light beam defining a positioning point for the at least one accessory.

According to a possible embodiment, the at least one emitting element is coupled to the machining unit so as to move as one with the machining unit. In doing so, the processing unit is moved to a predetermined position where it is desired that the light beam be projected and the at least one emitting element is activated to emit the light beam.

Alternatively, the emitting element is coupled to a movable body above the work table so as to be able to project the light beam at a desired point of the work table itself.

Preferably, the at least one emitting element is configured to project the light beam so that it is perpendicular to the work table.

Preferably, the at least one emitting element is a laser emitter configured to emit a laser beam.

The machine further comprises at least one indicating device coupled to the at least one accessory and which can be activated to provide an operator with a positioning signal representing the fact that the at least one accessory has been positioned at the predetermined position.

In other words, the indicating device is activated if the at least one accessory is positioned, on the work table, in the position indicated by the light beam, that is, in the predetermined position.

According to one embodiment, the indicating device is a light-emitting body, for example a single LED, a strip of LEDs or the like. In this embodiment, the positioning signal is a light signal.

In other words, if at least one accessory is positioned on the work table where the light beam indicates, the indicating device activates, providing the operator with a light signal, that is to say, the light-emitting body illuminates. In addition or as an alternative to the light signal, if the at least one accessory is positioned in the position indicated by the light beam, the at least one indicating device may provide the operator with an acoustic, vibrational and/or haptic signal.

The machine further comprises at least one receiving element coupled to the at least one accessory.

The receiving element is configured to send an activation signal to the indicating device when the light beam hits the receiving element.

In use, the at least one emitting element emits the light beam at a predetermined position on the work table (that is, the intended location for the accessory).

Subsequently, the accessory is placed at the positioning point indicated by the light beam. In this situation, when the light beam hits the at least one receiving element, the latter sends an activation signal to at least one indicating device, thus providing the operator with the positioning signal. In this situation, thanks to the emission of the positioning signal, the operator is able to understand that the positioning has been successful.

Preferably, at least one indicating device is positioned on a lateral outside surface of the at least one accessory so as to be visible to the operator. This aspect is particularly advantageous when the positioning signal is a light signal.

Even more preferably, the machine comprises at least one indicating device for each wall defining the lateral outside surface of the at least one accessory. This aspect is particularly advantageous when these indicating devices are luminous bodies, as this arrangement allows the operator, wherever they are in relation to the accessory, to check that the accessory has been correctly positioned.

According to one embodiment, the at least one receiving element comprises a photoresistor (Light Dependent Resistor) configured, when hit by the light beam, to create current which powers the indicating device.

In this situation, when the light beam hits the photoresistor, an electric current is created that powers the indicating device so that the latter can provide the operator with the positioning signal.

Alternatively to the above-mentioned embodiment, the at least one receiving element comprises at least one waveguide extending between a first end, positioned on a top wall of the at least one accessory so as to be hit by the light beam, and a second end, operatively connected to the at least one indicating device.

Preferably, the waveguide is an optic fibre,

According to an aspect of the invention, the at least one accessory may comprise a sending module configured, when the activation signal is sent by the at least one receiving element to the at least one indicating device, to send a signal to a machine control unit representing the positioning of the at least one accessory.

In other words, when the at least one indicating device is activated to provide an operator with a positioning signal representing the positioning of at least one accessory in the predetermined position, the sending module sends to the control unit of the machine the signal representing the positioning of the at least one accessory. In doing so, the machine control unit acquires the information that the accessory just positioned on the work table has actually been correctly positioned in the desired position.

According to one aspect of the invention, in addition to or as an alternative to the sending module, the machine may also comprise detection means, preferably coupled to the at least one emitting element, configured to detect an activation state of the at least one indicating device and to send to a control unit of the machine a signal representing the fact that the at least one accessory has been positioned.

Preferably, the machine further comprises an additional receiving element positioned on a top surface of the at least one accessory and spaced from the at least one receiving element and an additional indicating device coupled to the additional receiving element.

Preferably, the at least one receiving element is positioned at the centre of the top surface and the additional receiving element is positioned in proximity to a corner of the top surface.

The presence of two receiving elements coupled to respective indicating devices allows the at least one accessory to be positioned on the surface so that its orientation also matches a desired orientation.

The technical purpose and the aims specified are furthermore substantially achieved by a method for checking a positioning of an accessory on a work table of a machine for machining a workpiece, in particular a workpiece made of wood or the like, according to the invention.

Preferably, the method checks the positioning of an accessory on the work table of a machine in accordance with what is described above.

The method comprises a step of coupling at least one accessory, comprising at least one indicating device and at least one receiving element, to a work table.

The indicating device can be activated to provide an operator with a positioning signal representing the fact that the at least one accessory has been positioned and that the at least one receiving element is configured to send an activation signal to the indicating device.

The method further comprises a step of projecting, by means of an emitting element, at a predetermined position of the work table, a light beam defining a positioning point for the at least one accessory.

Subsequently, the method comprises a step of moving the at least one accessory to the predetermined position such that the light beam hits the receiving element.

In other words, the at least one accessory is moved until the light beam is aligned perpendicularly to the positioning point.

The method then comprises a step of sending, via the at least one receiving element, an activation signal to the at least one indicating device, and a step of providing an operator, via the at least one indicating device, with a signal representing the fact that the at least one accessory has been positioned in the predetermined position.

According to one embodiment, the at least one accessory comprises an additional receiving element and an additional indicating device.

In this situation, the method comprises, after the providing step, a step of adjusting the orientation of the at least one accessory in space.

The adjustment step comprises a sub-step of moving the emitting element so as to project, in an additional predetermined position of the work table, the light beam defining an additional positioning point for the at least one accessory.

The adjustment step also comprises a sub-step of rotating the at least one accessory around the positioning point until the additional receiving element is positioned below the light beam.

In other words, the at least one accessory is rotated around the positioning point until the light beam hits the additional receiving element.

Subsequently, the adjustment step also comprises a step of sending, via the additional receiving element, an activation signal to the additional indicating device and a step of providing an operator, via the additional indicating device, with a signal indicating that the at least one accessory has been oriented.

Further characteristics and advantages of the present invention will become clearer from the illustrative, and therefore non-limiting, description of an embodiment of a machine for machining a workpiece and of a method for checking a positioning of an accessory on a work table of a machine for machining a workpiece.

The description is set out below with reference to the accompanying drawings which are provided solely for purposes of illustration without restricting the scope of the invention and in which:
- Figure 1 shows a perspective view of a machine according to the present invention;
- Figure 2 shows an accessory of the machine of Figure 1;
- Figure 3 shows an additional accessory of the machine of Figure 1;
- Figures 4A-4D show perspective views of steps of the method according to the present invention.

With reference to the accompanying drawings, "M" denotes a machine for machining a workpiece, in particular a wooden workpiece or the like.

The machine "M" comprises a work table 100.

The machine "M" also comprises a machining unit 200 movable relative to the work table 100 and configured to perform at least one machining process on the workpiece.

The machining unit 200 is positioned above the work table 100.

The machine "M" also comprises at least one accessory 300 configured to be coupled to, and uncoupled from, the work table 100 and to support and/or hold in place the workpiece.

In the accompanying drawings, by way of a non-limiting example, the accessories 300 are suction cups.

The machine "M" further comprises at least one emitting element 400 configured to project, in a predetermined position of the work table 100, a light beam "R" defining a positioning point "P" for the at least one accessory 300.

Preferably, the at least one emitting element 400 is a laser emitter configured to emit a laser beam.

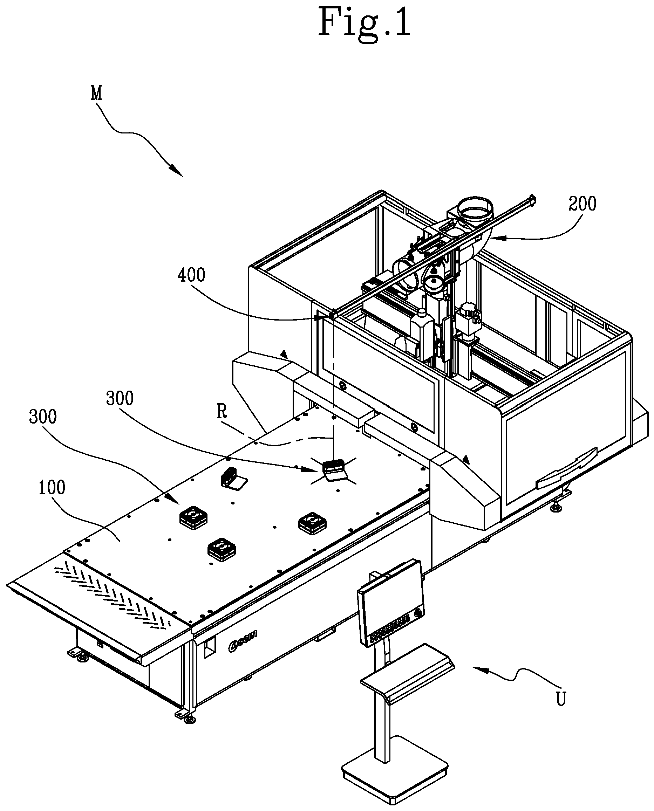

In the embodiment illustrated in Figure 1, the at least one emitting element 400 is coupled to the machining unit 200 so as to move as one with the machining unit 200.

In this situation, by moving the machining unit 200, the at least one emitting element 400 is brought to the position where the at least one accessory 300 is intended to be positioned so that the light beam "R" is projected in that position on the work table 100.

The machine "M" further comprises at least one indicating device 500 coupled to the at least one accessory 300 and which can be activated to provide an operator with a positioning signal representing the fact that the at least one accessory 300 has been positioned in the predetermined position.

In other words, the at least one indicating device 500 is activated when the at least one accessory 300 is positioned in the predetermined position.

With reference to the accompanying drawings, the at least one indicating device 500 is a light-emitting body and the positioning signal is a light signal. This light-emitting body can be formed by a single element, for example an LED, or by multiple elements, for example a plurality of LEDs.

Preferably, the at least one indicating device 500 is positioned on a lateral outside surface 301 of the at least one accessory 300 so as to be visible to the operator.

More preferably, the machine "M" comprises at least one indicating device 500 for each wall 301a defining the lateral outside surface 301 of the at least one accessory 300.

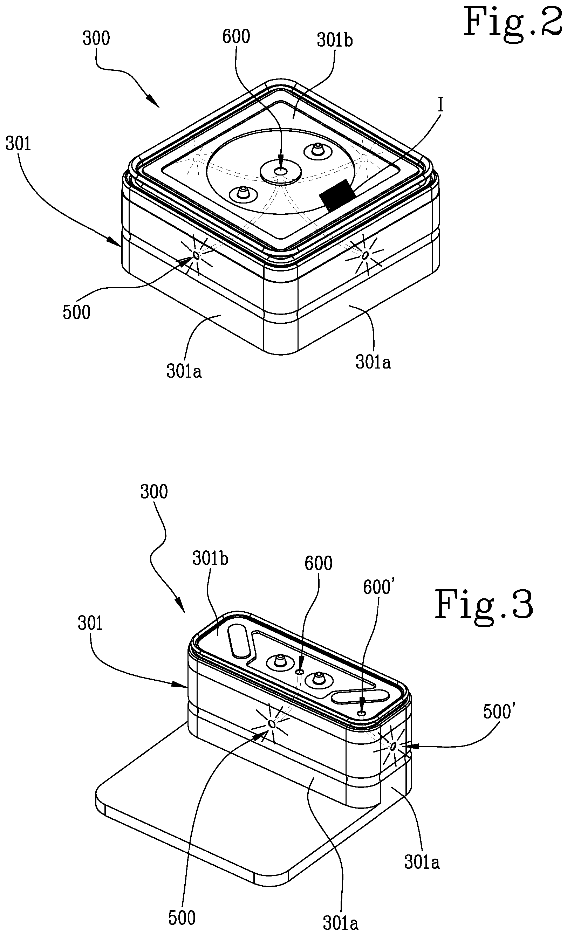

With reference to the accompanying drawings, in particular Figures 2 and 3, the accessory 300 comprises, for each wall 301a, an indicating device 500, in particular a light-emitting body.

In use, the at least one emitting element 400 is activated to project the light beam "R" so as to define on the work table the positioning point "P" where the at least one accessory 300 is to be positioned. In this situation, when the at least one accessory 300 is positioned in the positioning point "P", the at least one indicating device 500 is activated to provide the operator with a positioning signal, indicating that the accessory 300 has been successfully positioned in the predetermined position.

If the at least one indicating device 500 is a light-emitting body, the operator will receive a light signal, that is to say, the operator will see a light of the at least one indicating device 500 switch on.

In addition to the light signal, the at least one indicating device 500 may also provide an acoustic and/or vibrational and/or haptic signal.

Alternatively, instead of the light signal, the at least one indicating device 500 may provide an acoustic and/or vibrational and/or haptic and/or optical signal.

The machine "M" further comprises at least one receiving element 600 coupled to the at least one accessory 300.

The at least one receiving element 600 is configured to send an activation signal to the indicating device 500 when the light beam "R" hits the at least one receiving element 600.

In particular, the at least one receiving element 600 sends the activation signal to the indicating device 500 when the at least one receiving element 600 is vertically aligned with the light beam "R" so that the light beam hits the at least one receiving element 600 perpendicularly.

In use, the at least one emitting element 400 is activated to project the light beam "R" so as to define on the work table the positioning point "P" where the at least one accessory 300 is to be positioned. In this situation, when the at least one receiving element 600 is positioned in the positioning point "P", it sends the activation signal to the indicating device 500.

According to one embodiment, the at least one receiving element 600 comprises a photoresistor (Light Dependent Resistor) configured, when hit by the light beam "R", to create current which powers the indicating device 500.

In accordance with an alternative embodiment, shown in the accompanying drawings, the at least one receiving element 600 comprises at least one waveguide (represented with a dashed line), for example an optic fibre, extending between a first end, positioned on a top wall 301b of the at least one accessory 300 so as to be hit by the light beam "R", and a second end, operatively connected to the at least one indicating device 500.

In the embodiments shown in Figures 2 and 3, the at least one receiving element 600 comprises four waveguides having the first ends converging at a single point of the top wall 301b and the second ends operatively connected to a respective indicating device 500.

In use, therefore, the at least one emitting element 400 projects, on the work table 100, the light beam "R" so as to indicate the positioning point "P" for the at least one accessory 300.

Subsequently, the at least one accessory 300 is placed on the work table 100 in such a way that the at least one receiving element 600 is hit by the light beam "R".

In this situation, when the light beam "R" hits the at least one receiving element 600, the latter sends the activation signal to the at least one indicating device 500 which is activated to provide the operator with the positioning signal.

In the case of the embodiments illustrated in Figures 2 and 3, when the activation signal is sent to the at least one indicating device 500, the latter illuminates producing a light visible by the operator who thus understands that the positioning of the at least one accessory 300 in the predetermined position has taken place.

In accordance with the embodiment of Figure 2, the at least one accessory 300 comprises a sending module "I" configured, when the activation signal is sent by the at least one receiving element 600 to the at least one indicating device 500, to send to the control unit "U" of the machine "M" a signal representing the fact that the at least one accessory 300 has been positioned.

According to one aspect of the invention, the machine "M" may comprise detection means, preferably coupled to the at least one emitting element 400, configured to detect an activation state of the at least one indicating device 500 and to send to a control unit "U" of the machine "M" a signal representing the positioning of the at least one accessory 300.

In this situation, with reference for example to the embodiment of Figure 2, when the at least one indicating device 500 is activated, that is, it emits light, the detection means detect the emission of the light and send to the control unit "U" the signal representing the fact that the at least one accessory 300 has been positioned.

With reference now to the embodiment shown in Figures 3-4D, the machine "M" also comprises an additional receiving element 600' positioned on a top surface 301b of the at least one accessory 300 and spaced from the at least one receiving element 600 and an additional indicating device 500' coupled to the additional receiving element 600'.

Preferably, the at least one receiving element 600 is positioned at the centre of the top surface 301b and the additional receiving element 600' is positioned in proximity to a corner of the top surface 301b.

In the embodiment shown in Figures 3-4D, the at least one accessory 300 has, in plan view, a rectangular shape and the at least one receiving element 600 is located in the centre of the rectangle, while the additional receiving element 600' is positioned in proximity to a corner of the rectangle.

In this situation, the at least one indicating device 500 and the additional indicating device 500' are activated as the light beam "R" hits respectively the receiving element 600 and the additional receiving element 600'.

The present invention also relates to a method for checking the positioning of an accessory 300 on a work table 100 of a machine "M" for machining a workpiece, in particular a workpiece made of wood or similar material.

Preferably, the machine "M" to which reference is made is a machine "M" in accordance with the above description.

The method comprises a step of coupling at least one accessory 300 comprising at least one indicating device 500 and at least one receiving element 600 to a work table 100.

In this situation, the at least one indicating device 500 is operatively connected to the receiving element 600.

If it is necessary to position multiple accessories 300 on the work table, the coupling step is repeated for each accessory 300.

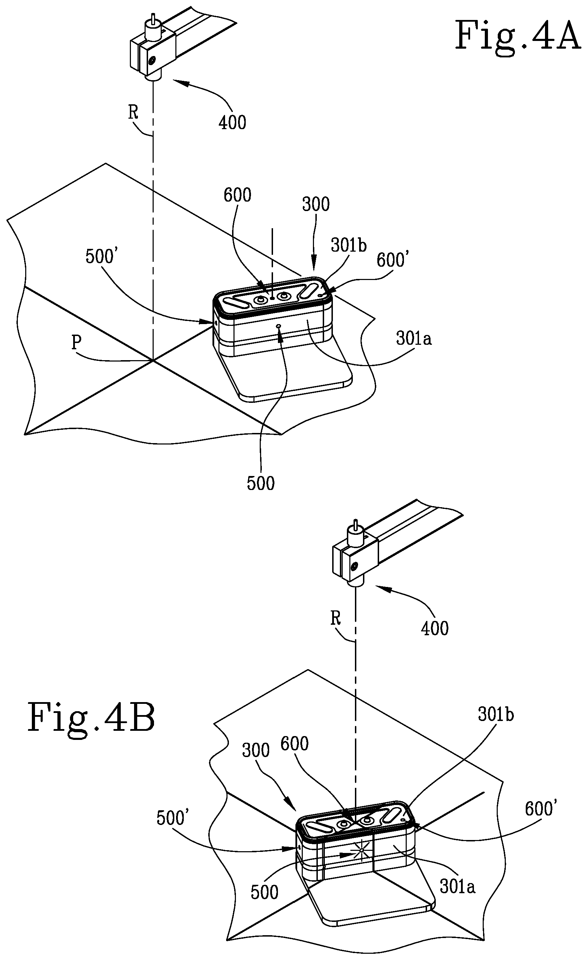

The method further comprises a step of projecting, by means of an emitting element 400, in a predetermined position of the work table 100, a light beam "R" defining a positioning point "P" for the at least one accessory 300 (Figure 4A).

Subsequently, the method comprises a step of moving the at least one accessory 300 to the predetermined position such that the light beam "R" hits the receiving element 600 (Figure 4B).

In other words, the at least one accessory 300 is moved so as to be positioned at the positioning point "P" so that the receiving element 600 is hit by the light beam "R".

Subsequently, the method comprises a step of sending, via the receiving element 600, an activation signal to the at least one indicating device 500. In the embodiment shown in Figures 4A-4D, since the at least one indicating device 500 is a light-emitting body, it lights up when activated.

The method then comprises a step of providing an operator, via the indicating device 500, with a signal representing the fact that the at least one accessory 300 has been positioned in the predetermined position.

In the embodiment shown in Figures 4A-4D, since the at least one indicating device 500 is a light-emitting body, the positioning signal is a light signal visible to the operator.

If it is intended to position another accessory 300, the at least one emitting element 400 is moved so as to emit the light beam "R" on an additional positioning point where the additional accessory 300 is to be positioned, and the steps of the method are repeated.

According to the embodiment illustrated in Figures 4A-4D, the at least one accessory 300 also comprises an additional receiving element 600' and an additional indicating device 500'.

The additional indicating device 500' and the additional receiving element 600' are operatively connected to each other so that the additional receiving element 600', when hit by the light beam "R", sends the activation signal to the additional indicating device 500'.

Preferably, as shown in Figures 4a-4d, the additional receiving element 600' is positioned at a corner of the top wall 301b of the accessory 300 while the receiving element 600 is positioned at a centre of the top wall 301b.

According to the embodiment illustrated in Figures 4A-4D, the method further comprises, following the providing step, a step of adjusting an orientation of the at least one accessory 300 in space.

In other words, after the indicating device 500 has provided the operator with the positioning signal representing the fact that the accessory 300 has been positioned in the predetermined position, the method comprises an adjustment step.

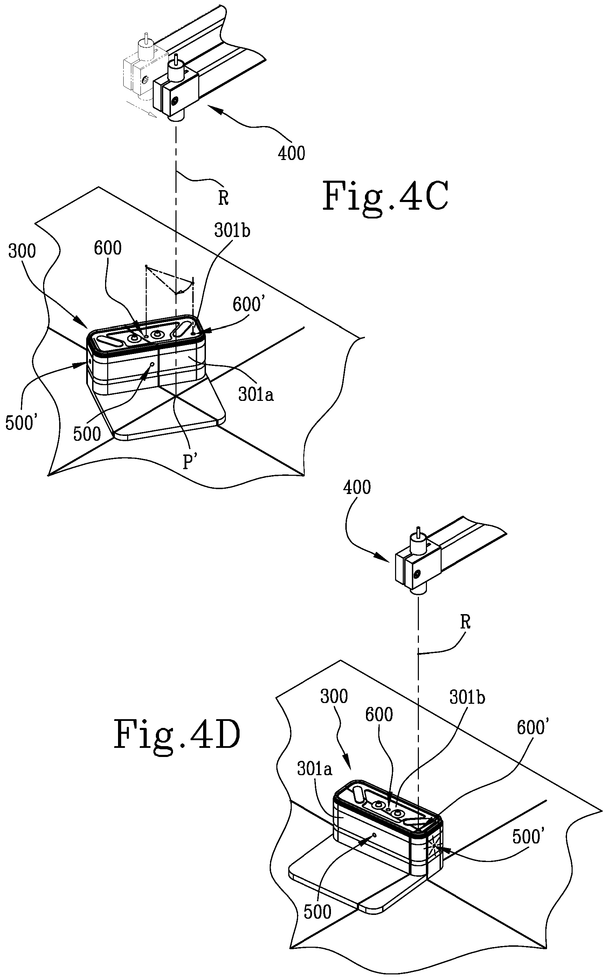

The adjustment step comprises a sub-step of moving the emitting element 400 so as to project, in an additional predetermined position of the work table 100, the light beam "R" defining an additional positioning point "P" for the at least one accessory 300 (Figure 4C).

The adjustment step then comprises a sub-step of rotating the at least one accessory 300 around the positioning point "P" until the additional receiving element 600' is positioned below the light beam "R" (Figure 4D).

Subsequently, the adjustment step comprises a sub-step of sending, by means of the additional receiving element 600', an activation signal to the additional indicating device 500'.

As shown in Figure 4D, when the light beam "R" hits the additional receiving element 600', the additional indicating device 500' operatively connected to it lights up.

Subsequently, the adjustment step comprises a sub-step of providing the operator, by means of the additional indicating device 500', with a signal representing the fact that the at least one accessory 300 has been oriented. As shown in Figure 4D, when illuminated, the additional indicating device 500' provides the operator with a visual signal confirming the orientation of at least one accessory 300.

Advantageously, the fact of providing two indicating devices 500, 500' and two respective receiving elements 600, 600' allows the operator not only to check that the accessory 300 has been positioned in the desired position but also that the position has the correct orientation for the accessory 300.

The present invention achieves the preset aims eliminating the drawbacks of the prior art.

In particular, thanks to the at least one indicating device, the operator can easily confirm the correct positioning of the accessory.

Further, in this situation, it is certain that the positioning of the accessory 300 is correct since otherwise the receiving element 600, as it is not hit by the light beam "R" would not send any activation command to the indicating device 500 and, therefore, the indicating device 500 would not provide the operator with any signal.

## Claims

1. A machine (M) for machining a workpiece, in particular a wooden workpiece or the like, comprising:
- a work table (100);
- a machining unit (200), movable relative to said work table (100) and configured to perform at least one machining process on said workpiece;
- at least one accessory (300), configured to be coupled to, and uncoupled from, said work table (100) and to support and hold said workpiece in place;
- at least one emitting element (400), configured to project at a predetermined position of the work table (100), a light ray (R) which defines a positioning point (P) for said at least one accessory (300);
- at least one indicating device (500), coupled to said at least one accessory (300) and activable to provide to an operator a positioning signal representing the fact that said at least one accessory (300) has been positioned at said predetermined position;
- at least one receiving element (600), coupled to said at least one accessory (300). said receiving element (600) being configured to send an activation signal to said indicating device (500) when said light ray (R) hits said receiving element (600).

2. The machine (M) according to claim 1, wherein said positioning signal is a light signal and wherein said at least one indicating device (500) is a light-emitting body.

3. The machine (M) according to claim 1 or 2, wherein said at least one indicating device (500) is positioned on a lateral outside surface (301) of said at least one accessory (300) so it is visible to the operator.

4. The machine (M) according to claim 3, comprising at least one indicating device (500) for each wall (301a) defining said lateral outside surface (301) of said at least one accessory (300).

5. The machine (M) according to any one of the preceding claims, wherein said at least one receiving element (600) comprises a photoresistor (light dependent resistor), which is configured, when hit by the light beam (R), to create current which powers said indicating device (500).

6. The machine (M) according to any one of claims 1 to 4, wherein said at least one receiving element (600) comprises at least one waveguide, preferably an optic fibre, extending between a first end, located on a top wall (301b) of said at least one accessory (300) so it can be hit by said light beam (R), and a second end, operatively connected to said at least one indicating device (500).

7. The machine (M) according to any one of the preceding claims, wherein said at least one emitting element (400) is a laser emitter configured to emit a laser beam.

8. The machine (M) according to any one of the preceding claims, wherein said at least one emitting element (400) is coupled to said machining unit (200) so as to move as one with said machining unit (200).

9. The machine (M) according to claim 1, wherein said positioning signal is selectable from one or more of the following signals:
- acoustic signal;
- vibrational signal;
- haptic signal;
- optic signal.

10. The machine (M) according to any one of the preceding claims, wherein said at least one accessory (300) comprises a sending module (I) which is configured, when said activation signal is sent by the at least one receiving element (600) to the at least one indicating device (500), to send to a control unit (U) of the machine (M), a signal representing the fact that the at least one accessory (300) has been positioned.

11. The machine (M) according to any one of the preceding claims, comprising detecting means, preferably coupled to said at least one emitting element (400), and configured to detect an activated state of said at least one indicating device (500) and to send to a control unit (U) of the machine (M), a signal representing the fact that the at least one accessory (300) has been positioned.

12. The machine (M) according to any one of the preceding claims, comprising:
- an additional receiving element (600'), positioned on a top surface (301b) of said at least one accessory (300) and spaced from said at least one receiving element (600);
- an additional indicating device (500') coupled to said additional receiving element (600');
preferably, said at least one receiving element (600) being positioned at a centre of the top surface (301b) and said additional receiving element (600') being positioned in proximity to a corner of said top surface (301b).

13. A method for checking a position of an accessory (300) on a work table (100) of a machine (M) for machining a workpiece, in particular a wooden workpiece or the like, in particular a machine (M) according to one or more of the preceding claims, comprising the following steps:
- coupling at least one accessory (300), comprising at least one indicating device (500) and at least one receiving element (600), to a work table (100);
- via an emitting element (400), projecting at a predetermined position of the work table (100), a light ray (R) which defines a positioning point (P) for said at least one accessory (300);
- moving said at least one accessory (300) to said predetermined position so that said light ray (R) hits said receiving element (600);
- via said receiving element (600), sending an activation signal to said at least one indicating element (500);
- via said indicating device (500), providing to an operator a signal representing the fact that the at least one accessory (300) has been positioned.

14. The method according to claim 13, wherein said at least one accessory (300) comprises an additional receiving element (600') and an additional indicating device (500'); the method comprising, after said step of providing, a step of adjusting an orientation of the at least one accessory (300) in space, said step of adjusting comprising the following sub-steps:
- moving said emitting element (400) so as to project at an additional predetermined position of the work table (100), the light ray (R) which defines an additional positioning point (P') for said at least one accessory (300);
- rotating said at least one accessory (300) around the positioning point (P) until said light beam (R) hits said additional receiving element (600');
- via said additional receiving element (600'), sending an activation signal to said additional indicating element (500');
- via said additional indicating device (500'), providing to an operator a signal representing the fact that the at least one accessory (300) has been positioned.
